# EUROPÄISCHE PATENTSCHRIFT

(11) **EP 3 155 678 B1**
(45) Veröffentlichungstag und Bekanntmachung des Hinweises auf die Patenterteilung: **11.09.2019**
(21) Anmeldenummer: 15729092.5
(22) Anmeldetag: 29.05.2015
(51) Int. Cl.: H01M 4/136, C01B 17/26, H01M 4/1397, H01M 4/36, H01M 4/58, H01M 10/052, H01M 4/62, H01M 10/39, H01M 10/054, H01M 10/0567

(54) **VERFAHREN ZUR HERSTELLUNG VON ALKALIMETALLSULFID-NANOPARTIKELN, ALKALIMETALLSULFID-NANOPARTIKEL, VERWENDUNG DER ALKALIMETALLSULFID-NANOPARTIKEL SOWIE ALKALIMETALL-SCHWEFEL-BATTERIE**
METHOD FOR PRODUCING ALKALI METAL SULPHIDE NANOPARTICLES, ALKALI METAL SULPHIDE NANOPARTICLES, USE OF THE ALKALI METAL SULPHIDE NANOPARTICLES, AND ALKALI METAL SULPHUR BATTERY
PROCÉDÉ DE PRÉPARATION DE NANOPARTICULES DE SULFURE DE MÉTAL ALCALIN, NANOPARTICULES DE SULFURE DE MÉTAL ALCALIN, UTILISATION DES NANOPARTICULES DE SULFURE DE MÉTAL ALCALIN ET BATTERIE MÉTAL ALCALIN-SOUFRE

(30) Priorität: 13.06.2014 DE 102014211421
(43) Veröffentlichungstag der Anmeldung: 19.04.2017
(73) Patentinhaber: Fraunhofer-Gesellschaft zur Förderung der angewandten Forschung, 80686 München (DE)
(72) Erfinder: BRÜCKNER, Jan, 01307 Dresden (DE); ALTHUES, Holger, 01309 Dresden (DE); KASKEL, Stefan, 01159 Dresden (DE); KOHL, Michael, 01277 Dresden (DE); BAUER, Ingolf, 01187 Dresden (DE)
(74) Vertreter: Pfenning, Meinig & Partner mbB
(86) Internationale Anmeldenummer: PCT/EP2015/061970
(87) Internationale Veröffentlichungsnummer: WO 2015/189053

(56) Entgegenhaltungen:
- WO-A1-2014/074150
- DE-A1-102012 203 019
- JP-A- 2013 227 180
- CAIYUN NAN ET AL: "Durable Carbon-Coated Li 2 S Core-Shell Spheres for High Performance Lithium/Sulfur Cells", JOURNAL OF THE AMERICAN CHEMICAL SOCIETY, Bd. 136, Nr. 12, 26. März 2014 (2014-03-26), Seiten 4659-4663, XP055207554, ISSN: 0002-7863, DOI: 10.1021/ja412943h in der Anmeldung erwähnt
- Satoshi Horikoshi ET AL: "Introduction to Nanoparticles" In: "Microwaves in Nanoparticle Synthesis", 24. April 2013 (2013-04-24), Wiley-VCH Verlag GmbH & Co. KGaA, Weinheim, Germany, XP055198443, ISBN: 978-3-52-733197-0 Seiten 1-24, DOI: 10.1002/9783527648122.ch1, Seiten 1,2 Tabelle 1.1

## Beschreibung

Die vorliegende Erfindung betrifft ein Verfahren zur Herstellung von Alkalimetallsulfid-Nanopartikeln, bei dem eine carbothermische Reduktion von Alkalimetallsulfat-Nanopartikel durchgeführt wird. Zudem betrifft die vorliegende Erfindung die durch das erfindungsgemäße Verfahren hergestellten Alkalimetallsulfid-Nanopartikel, sowie deren Verwendung als Kathodenmaterial, insbesondere für eine Alkalimetall-Schwefel-Batterie.

Die Erfindung betrifft zudem eine Alkalimetall-Schwefel-Batterie, die eine Kathode umfasst, die erfindungsgemäße Alkalimetallsulfid-Nanopartikel beinhaltet. Bei dem Alkalimetallsulfid handelt es sich insbesondere um Lithiumsulfid.

Lithium-Schwefel Batterien ermöglichen eine Erhöhung der erreichbaren Energiedichte für reversible, elektrochemische Energiespeicher von 250 Wh/kg. Mit der aktuellen Li-Ion Technologie ist eine Steigerung auf über 400 Wh/kg für die Lithium-Schwefel-Batterie erzielbar.

Einige Probleme der Lithium-Schwefel Batterietechnologie verhindern bisher allerdings die Kommerzialisierung. Bisher wird Schwefel in der Kathode der Batterie gegen metallisches Lithium als Anode eingesetzt. Dabei besteht allerdings das Problem, dass metallisches Lithium sehr reaktiv ist und reversible Zyklierung einer solchen Zelle nicht möglich ist. So reagiert metallisches Lithium mit dem Elektrolyten, welches zu gasförmigen Abbauprodukten führt, die explosiv und brennbar sind.

Weiter kommt es bei der Ladung von metallischen Lithiumanoden zur ungleichmäßigen Abscheidung von Lithium, der sogenannten Dendritbildung. Diese erhöht die Reaktivität des Lithiums weiter, da sie die Lithiumoberfläche vervielfacht. Außerdem kann die Dendritbildung zu einem Kurzschluss führen indem die Lithiumdendriten den Separator der Batteriezelle durchstoßen und zur Kathode wachsen. Der resultierende Kurzschlussstrom erhitzt die Zelle, was zum Verdampfen des Elektrolyten und zur Zündung der brennbaren Bestandteile (Elektrolyt, Separator, Kohlenstoff, Binder und Schwefel in der Kathode) der Batterie führt. Dieser Vorgang wird "thermal-run-away" genannt.

Das dritte große Problem beim Einsatz von metallischem Lithium als Anode in der Lithium-Schwefel-Batterie ist ein Degradationsmechanismus. Bei Lithium-Ion Batterien werden bei der Ent-/Ladung der Zelle Lithiumionen reversibel und kontinuierlich in eine offene Struktur wie Kohlenstoff oder Metalloxide de-/interkaliert. Im Gegensatz dazu bilden sich beim Ent-/Laden der Lithium-Schwefel-Batterie Zwischenprodukte, sogenannte Polysulfide. Diese Polysulfide sind löslich im Elektrolyt und aufgrund von Diffusion auch in Kontakt mit der Oberfläche der Anode. Bei der Ladung der Zelle und der Bildung der Lithiumdendriten ist somit metallisches Lithium in direktem Kontakt mit dem Elektrolyten und den darin gelösten Polysulfiden. Da das chemische Potential der Lösemittelmoleküle und Polysulfide über dem von Lithium liegt kommt *es* zur Redoxreaktion. Dabei reagieren Polysulfide aus dem Elektrolyten ab und es kommt zum irreversiblen Aktivmaterialverlust und somit einer Verringerung der Kapazität der Zelle. Es ist wichtig anzumerken, dass *die* Reaktion zwischen Anode und Elektrolyt immer erfolgt. Als Folge bildet sich eine Schutzschicht aus, die leitfähig für Lithiumionen, aber nicht leitfähig für weitere Lösemittelmoleküle ist. Dies nennt man SEI für "solid-electrolyte-inferface". Die Besonderheit bei metallischem Lithium ist allerdings, dass es durch das ungleichmäßige Aufwachsen immer wieder zum Aufreißen der Schutzschicht kommt und erneut Elektrolyt und Aktivmaterial verbraucht wird.

Dieser Degradationsmechanismus ist auch von Lithium-Ion Batterien bekannt, wenn metallisches Lithium als Anode eingesetzt wird. Da bisher keine effektive Schützung von metallischem Lithium bekannt ist, die das Aufreißen der SEI verhindert, wird das Problem bei Lithium-Ion Batterien umgangen indem alternative Anoden, wie zum Beispiel Graphit oder Silizium, eingesetzt werden. In Lithium-Ion Batterien ist dies leicht möglich, da die Zellen im entladenen Zustand assembliert werden und die Kathode somit lithiiert ist. Im Gegensatz dazu wird die Lithium-Schwefelzelle standardmäßig im geladenen Zustand verbaut, nutzt unlithiierten Schwefel und erhalt sein Lithium vom metallischen Lithium als Anodenmaterial. Ersetzt man folglich die Anode in der Lithium-Schwefelbatterie muss auf andere Art und Weise Lithium in die Zelle eingebracht werden.

Es ergeben sich zwei naheliegende Möglichkeiten die Lithiierung durchzuführen. Entweder wird die Anode prälithiiert oder die Kathode. Beide Methoden sind schwierig, da die lithiierten Materialien, wie auch metallisches Lithium, sehr reaktiv gegenüber Wasser und Luft sind. Anders als bei Lithium-Ion Batterien ist somit eine Assemblierung von Lithium-Schwefelzellen nicht im Trockenraum möglich.

Die generelle Herstellung von Lithiumsulfid wurde unter anderem in drei Patenten beschrieben.

Flüssiges Lithiumsulfat wird gemäß US 2,840,455 aus dem Jahr 1953 bei 1150°C in einem Turmreaktor mit reduzierendem Wasserstoff-, Methan-, Ethan- oder Erd-Gas zu Lithiumsulfid umgesetzt. Ein zweites Patent aus dem Jahr 2002 (DE 697 26 022 T2) listet verschiedene Varianten zur Herstellung von Lithiumsulfid auf. Lithiumsulfat wird mit Saccharose oder mit Ruß gemischt und 5 Stunden bei 900°C, im flüssigen Aggregatszustand des Lithiumsulfates, in einem Argon-Gasstrom erhitzt und zu Lithiumsulfid reduziert. Andere Herstellungsverfahren von Lithiumsulfid sind durch die Reaktion von Lithium-Hydrogensulfid-Ethanol mit Wasserstoffgas für 2 Stunden bei 300°C und die Reaktion metallischem Lithium mit Schwefel bei 115°C unter einem Argon-Gasstrom beschrieben. In DE 600 06 236 T2 aus dem Jahr 2004 wird die Herstellung von Lithiumsulfid aus der Reduktion von flüssigem Lithiumsulfat in der Gegenwart von Kohlenstoff bei 860°C dargelegt.

2013 wurden von Seh et al. (Chem. Sci. 2014, 5, 1396) Lithiumsulfid Partikel für Batterieanwendungen entwickelt. Käuflich erwerbliches Lithiumsulfid wurde über Ultraschall mit synthetisiertem Graphenoxid eingewickelt um die oxidische Funktionalität des Graphenoxides dazu zu nutzen die Menge an löslicher Aktivspezies im Elektrolyten, die sich in Lithium-Schwefel Batteriezellen mit flüssigem Elektrolyten unweigerlich bilden, zu verringern.

Solch 20 µm große Lithiumsulfid Partikel sind nicht luftstabil, da das Graphenoxid Wasser hindurchlassen kann und müssen bei einer Spannung von 3,8 V gegen Lithium aktiviert werden aufgrund ihrer hohen Größe. Die Elektroden wurden durch Rakeln des Lithiumsulfid-Komposits mit Super P Leitadditiv und Polyvinylidenfluorid Binder in N-Methyl-2-pyrrolidinon als Lösungsmittel mit nicht genannter Dicke auf kohlenstoffbeschichteter Aluminiumfolie prozessiert. Der verwendete Elektrolyt besteht aus 1 M LiTFSI und 0.25 M LiNO₃ in 50 Vol.-% DME und 50 Vol.-% DOL.

Die Beladung an Lithiumsulfid in der Kathode betragt 53 M.-% und ∼ 1 mg/cm². Die Erstentlade-Kapazität einer solchen Kathode gegen eine Lithiummetall-Anode beträgt -371 mAh/g-Kathode.

In der gleichen Zeit wurde ebenfalls von Seh et al. (Energy Environm. Sci, 2014, 7, 672-676) ein ähnlicher Ansatz mit Hilfe von Polypyrrol verfolgt. Eine Co-Fällung bei gleichzeitiger Polymerisation von Pyrrol auf käuflich erwerblichen 20 µm großen Lithiumsulfid Partikeln führte zu Polypyrrol beschichteten Lithiumsulfid. Das Polypyrrol an sich besteht aus 700 nm großen Partikeln. Solch Lithiumsulfid weißt ebenfalls eine geringere Polysulfid-Herauslösung auf, wenn es als Kathodenmaterial in einer Batteriezelle mit Flüssigelektrolyt gegen Lithium eingesetzt wird, da das Polypyrrol Li-N Bindungen mit dem Lithiumsulfid eingeht und dieses stabilisiert. Diese ca. 20 µm große Lithiumsulfid Partikel sind trotz der Beschichtung nicht luftstabil, da Polypyrrol Wasser hindurchlassen kann und müssen bei einer Spannung von 3,8 V gegen Lithium aktiviert werden aufgrund ihrer hohen Größe. Die Elektroden wurden durch Rakeln des Lithiumsulfld-Komposits mit Super P Leitadditiv und Polyvinylidenfluorid Binder in N-Methyl-2-pyrrolidinon als Lösungsmittel mit nicht genannter Dicke auf Kohlenstoff beschichteter Aluminiumfolie prozessiert. Der verwendete Elektrolyt besteht aus 1 M LiTFSI und 0.25 M LiNO₃ in 50 Vol.-% DME und 50 Vol.-% DOL.

Die Beladung an Lithiumsulfid in der Kathode beträgt 52 M.-% und ∼ 1 *mg*/*cm²*. Die Erstentlade-Kapazität einer solchen Kathode gegen eine Lithiummetall-Anode beträgt -361 mAh/g-Kathode.

Ebenfalls im Jahr 2013 haben Nan et al. (JACS, 2014, 136(12), 4659-4663). Versuche unternommen, Lithiumsulfid Partikel über einen CVD Prozess mit Kohlenstoll zu beschichten. Dazu wurde Schwefel in Toluol gelöst und zu einer Lithiumtriethylborohydrid Lösung in Tetrahydrofuran gegeben. Diese Lösung wurde 2 min bei Raumtemperatur gerührt und danach unter Rühren bevorzugt 7 - 10 min auf 90°C erwärmt. Durch diese Behandlung sind 1 - 2 µm große Lithiumsulfid Partikel synthetisiert wurden. Die so hergestellten Lithiumsulfid Partikel wurden in einem nachträglichen chemischen Gasphasenabscheidungs-Prozess (CVD-Prozess) erst für 30 min bei 500°C unter Argon erwärmt und anschließend für 90 min bei 450°C mit einem Ethin/Argon Gasgemisch (Ethin-Konzentration ca. 9 %) mit Kohlenstoff beschichtet. Beim Beschichtungsprozess wurde die Probe alle 30 min aus der Beschichtungskammer entfernt und unter Schutzgas in einer Handschuhbox für 10 min mit einem Mörser und Pistill gemahlen um eine bessere Beschichtung zu erreichen. Die Partikel waren trotz der Beschichtung luftempfindlich und reagieren mit Luftfeuchtigkeit. Die Herstellung der Elektroden wurde durch Auftropfens des Lithiumsulfid-Komposits in N-methyl-2-Pyrrolidinon als Lösungsmittel auf ein Kohlenstoff-Papier erreicht. Der verwendete Elektrolyt ist nicht genannt. Die Beladung an Lithiumsulfid in der Kathode beträgt 88 M.-% bei nicht genannter Flächenbeladung. Die Erstentlade-Kapazität einer selchen Kathode gegen eine Lithiummetall-Anode beträgt ∼ 800 mAh/g-Li₂S.

Die JP 2013-227180 A offenbart ein Verfahren zur Herstellung von hochreinem Lithiumsulfid.

Nach wie vor ungelöst bei den zuvor genannten Verfahren zur Herstellung von Lithiumsulfid ist jedoch, ein einfaches und zuverlässiges Verfahren zur Herstellung von Alkalimetallsulfid-Nanopartikeln anzugeben sowie ggfs. luftstabile Alkalimetallsulfid-Partikel herzustellen bzw. anzugeben.

Aufgabe der vorliegenden Erfindung ist es daher, ein einfaches und zuverlässiges Verfahren anzugeben, mit dem sich insbesondere luftstabile Alkalimetallsulfid-Nanopartikel, insbesondere Lithiumsulfid-Nanopartikel herstellen lassen. Zudem ist es Aufgabe der vorliegenden Erfindung, insbesondere luftstabile Alkalimetallsulfid-Nanopartikel, insbesondere Lithiumsulfid-Nanopartikel bereitzustellen. Die Erfindung stellt sich zudem die Aufgabe, Verwendungsmöglichkeiten für die derart erzeugten Alkalimetallsulfid-Nanopartikel, insbesondere in einer Alkalimetall-Schwefel-Batterie anzugeben.

Diese Aufgabe wird hinsichtlich eines Verfahrens zur Herstellung von Alkalimetall-Nanopartikeln mit den Merkmalen des Patentanspruchs 1, bezüglich stabiler Alkalimetallsulfid-Nanopartikeln mit den Merkmalen des Patentanspruchs 9, hinsichtlich Verwendungsmöglichkeiten der Alkalimetallsulfid-Nanopartikeln mit den Merkmalen des Patentanspruchs 10 sowie bezüglich einer Alkalimetall-Schwefel-Batterie mit den Merkmalen des Patentanspruchs 11 gelöst.

Die vorliegende Erfindung betrifft somit ein Verfahren zur Herstellung von Alkalimetallsulfid-Nanopartikeln, bei dem eine Mischung, enthaltend Alkalimetallsulfat-Nanopartikel und Kohlenstoff-haltigem Material erzeugt und die Mischung unterhalb der Schmelztemperatur des Alkalimetallsulfats carbothermisch reduziert wird.

Insbesondere ist dabei das Alkalimetall ausgewählt aus der Gruppe bestehend aus Lithium und/oder Natrium.

Insbesondere und besonders bevorzugt betrifft die vorliegende Erfindung ein Verfahren zur Herstellung von Lithiumsulfid-Nanopartikeln, bei dem eine Mischung, enthaltend Lithiumsulfid-Nanopartikel und Kohlenstoff-haltige Materialien erzeugt und die Mischung unterhalb der Schmelztemperatur des Lithiumsulfat carbothermisch reduziert wird.

Erfindungsgemäß beträgt die mittlere Teilchengröße d₅₀ der Alkalimetallsulfat-Nanopartikel (z.B. Lithiumsulfat-Nanopartikel) von 5 bis 100 nm.

Das Kohlenstoff-enthaltende Material ist dabei bevorzugt ausgewählt aus der Gruppe bestehend aus Ruß, porösen Kohlenstoffen, Kohlenstoffnanoröhrchen, Graphit, Graphen, Kohlenstofffasern sowie Mischungen oder Kombinationen hieraus.

Gemäß einer weiteren bevorzugten Ausführungsform werden die Alkalimetallsulfat-Nanopartikel mit dem Kohlenstoff enthaltenden Material in einem Gewichtsverhältnis von 20:100 bis 100:100, bevorzugt von 30:100 bis 75:100, weiter bevorzugt von 53:100 bis 73:100, weiter bevorzugt von 62:100 bis 69:100 eingesetzt.

Die Mischung des Alkalimetallsulfats und des Kohlenstoff-enthaltenden Materials kann beispielsweise dadurch hergestellt werden, dass Alkalimetallsulfat mit dem Kohlenstoff-enthaltenden Material vermahlen wird. Beim Mahlvorgang findet eine Zerkleinerung des Alkalimetallsulfats zu entsprechenden Nanopartikeln statt. Der Mahlvorgang kann insbesondere in einer Kugelmühle, beispielsweise einer Planetenkugelmühle ausgeführt werden. Alternativ und ebenso ist es bevorzugt, wenn die Alkalimetallsulfat-Nanopartikel in situ in Gegenwart des Kohlenstoff-enthaltenden Materials erzeugt werden. Dieser in-situ-Prozess kann beispielsweise durch Fällung der Alkalimetallsulfat-Nanopartikel z.B. aus einer Alkalimetallsulfat-haltigen Lösung geschehen.

Ebenso ist es vorteilhaft, wenn die Mischung dadurch erzeugt wird, dass eine Alkalimetallsulfat-Lösung in poröse Kohlenstoffmaterialien infiltriert wird.

Vorteilhaft ist ferner, wenn die carbothermische Reduktion bei Temperaturen von 500 bis 880°C, bevorzugt von 600 bis 860°C, weiter bevorzugt von 650 bis 840°C, besonders bevorzugt von 700 bis 830°C durchgeführt wird.

Die carbothermische Reduktion kann über einen Zeitraum von 0,2 bis 48 h, bevorzugt von 2 bis 4 h durchgeführt werden.

Weiterhin kann zumindest der Schritt der carbothermischen Reduktion unter einer Inertgasatmosphäre, insbesondere unter einer Argon- und/oder Stickstoffatmosphäre durchgeführt werden.

Besonders bevorzugt ist es, wenn nach erfolgter carbothermischer Reduktion die Alkalimetallsulfid-Nanopartikel mit einer aus Kohlenstoff bestehenden oder Kohlenstoff enthaltenden Schale ummantelt werden.

Durch die Ummantelung der Alkalimetallsulfid-Nanopartikel entstehen Nanopartikel vom Kern-Schale-Typ mit einem Alkalimetallsulfid-enthaltenden Kern und einer aus Kohlenstoff bestehenden oder Kohlenstoff-enthaltenden Schale. Besonders vorteilhaft hierbei ist, dass derartige Nanopartikel luft- und hydrolysestabil sind und somit auch außerhalb einer Schutzgasatmosphäre gehandhabt werden können.

Vorzugsweise wird zur Ummantelung mindestens ein Kohlenstoff enthaltender Precursor, insbesondere ein gasförmiger und/oder flüssiger Precursor oder ein Precursor in Lösung eingesetzt, der mit den Alkalimetallsulfid-Nanopartikeln kontaktiert und aus dem nach erfolgter Kontaktierung die Kohlenstoff enthaltenden Hülle abgeschieden.

Hierbei ist der mindestens eine gasförmige Precursor bevorzugt ausgewählt aus der Gruppe bestehend aus bei Normalbedingungen gasförmigen Kohlenwasserstoffen, bevorzugt ungesättigten gasförmigen Kohlenwasserstoffen, insbesondere Ethin, Ethen, Propen sowie Mischungen hieraus und/oder der mindestens eine flüssige Precursor ausgewählt ist aus der Gruppe bestehend aus Pech und/oder Steinkohleteer oder organischen Polymeren und/oder organischen Polymerisations-Monomeren in flüssiger Phase oder als Lösung.

Die Erfindung betrifft zudem Alkalimetallsulfid-Nanopartikel, die gemäß dem zuvor beschriebenen Verfahren herstellbar sind.

Insbesondere handelt es sich bei den Alkalimetallsulfid-Nanopartikel um Lithiumsulfid- oder Natriumsulfid-Nanopartikel.

Die Alkalimetallsulfid-Nanopartikel zeichnen sich durch eine mittlere Teilchengröße d₅₀ zwischen 5 und 100 nm aus.

Erfindungsgemäß sind die Alkalimetallsulfid-Nanopartikel vom Kern-Schale-Typ, d.h. weisen einen aus Alkalimetallsulfid bestehenden oder Alkalimetallsulfid-enthaltenden Kern auf, der eine aus Kohlenstoff bestehende oder Kohlenstoff-enthaltende Schale aufweist. Erfindungsgemäß weist die Schale hierbei eine Dicke von 2 bis 20 nm auf.

Bei diesen Kern-Schale-Nanopartikeln ist es erfindungsgemäß, wenn ihre Dimensionierung wie weiter oben stehend beschrieben ist, d.h. ihre mittlere Teilchengröße d₅₀ zwischen 5 und 100 nm beträgt.

Die zuvor beschriebenen erfindungsgemäßen Alkalimetallsulfid-Nanopartikel eignen sich insbesondere als Kathodenmaterial für Alkalimetall-Schwefel-Batterien bzw. als Bestandteil eines derartigen Kathodenmaterials.

Insofern betrifft die Erfindung zudem eine Alkalimetall-Schwefel-Batterie, insbesondere eine Lithium-Schwefel-Batterie oder eine Natrium-Schwefel-Batterie, die eine Kathode aufweist, die die erfindungsgemäßen Alkalimetallsulfid-Nanopartikel enthält.

Gemäß einer bevorzugten Ausführungsform umfasst die Kathode ein Kathodenmaterial, das zumindest teilweise fibrilliertes Polytetrafluorethylen sowie Alkalimetallsulfid-Nanopartikel als elektrochemisch aktives Kathodenmaterial auf.

Bezüglich entsprechender Kathodenmaterialien, die fibrilliertes Polytetrafluorethylen umfassen, wird ergänzend auf die Patentanmeldung DE 10 2012 203 019 A1 verwiesen, die entsprechende Kathodenmaterialien sowie Verfahren zu deren Herstellung angibt. Hinsichtlich der Beschaffenheit dieser Kathodenmaterialien sowie der Herstellungsverfahren, insbesondere mittels Walzen oder Ausrollen des Polytetrafluorethylens zu dessen Fibrillierung wird auf den Offenbarungsgehalt dieser Patentanmeldung verwiesen.

Die erfindungsgemäßen Alkalimetallsulfid-Nanopartikel weisen insbesondere den Vorteil auf, dass sie als Kathodenmaterialien für Alkalimetall-Schwefel-Batterien die gleiche Performance wie unlithiierter Schwefel zeigen. Ein weiterer Vorteil der erfindungsgemäßen Alkalimetallsulfid-Nanopartikel gegenüber Schwefel ist, dass Batterien die mit diesen Alkalimetallsulfid-Nanopartikel hergestellt werden keinen Prelithiierung-Schritt benötigen.

Die vorliegende Erfindung wird anhand der nachfolgenden Beispiele beschrieben, ohne diese jedoch auf die speziellen Ausführungsformen zu beschränken.

### Beispiel 1: Herstellung von Lithiumsulfid-Partikeln

Durch Vermahlen von Lithiumsulfat-Partikeln zusammen mit einer Kohlenstoffmatrix in einer Planetenkugelmühle wird ein Gemisch aus Lithiumsulfat-Nanopartikeln mit einer durchschnittlichen Partikelgröße D50 zwischen 20 und 100 nm und Kohlenstoff erzeugt. Anschließend erfolgt eine carbothermische Reduktion von Lithiumsulfat mit Kohlenstoff unterhalb der Schmelztemperatur von Lithiumsulfat (Schmelzpunkt: 845°C). Überraschenderweise konnte festgestellt werden, dass bei der carbothermischen Reduktion die Partikelgröße der Lithiumsulfatpartikel beibehalten wird, so dass die daraus entstehenden Lithiumsulfidpartikel eine um 34 % geringere Größe aufweisen. Hierbei kommt es zu einer Volumenreduktion um ca. 55%

### Beispiel 2: Herstellung von Lithiumsulfid-Nanopartikeln sowie einer Lithiumsulfid-enthaltenden Zelle

### Beispiel 2: Unterschied 4h zu 60h Mahlzeit

- 68.6 M.-% Li2SO4.1H20 (>99 M.-% von Carl Roth) wurden mit Ruß (Ketjen Black 600JD) für vier (Probe A) beziehungsweise 60 Stunden (Probe B) in einer Planetenkugelmühle bei 450 rpm-1 gemahlen
   ∘ Mahlprogram jeweils 10 min mahlen 10 min Pause
- Danach bei 820°C für 3h mit 50 K/min Heizrate bei 1.2 slm Ar in Quarzglasrohr (40 mm Durchmesser) getempert
   ∘ man erhält Probe A^{red} bzw. B^{red}
- Nach der carbothermischen Reduktion wurden die Proben in eine mit Argon gefüllte Schutzgasbox transferiert
- Eine Kathode wurde durch eine trockene Verarbeitung erstellt und auf **Streckaluminium** (Bender GmbH, 12 µm dick) gewalzt
   ∘ die Masseanteile in der Kathode waren 96 M.-% Probe A^{red}/B^{red}, 3 M.-% PTFE (Aldrich), und 1 M.-% Kohlenstoff (Tulsimer, Blücher Adsor-Tech GmbH)
- Die erhaltene Kathode wurde in einer Knopfzelle (CR2016) verbaut. Die Bestandteile waren
   ∘ 12mm Kathoden aus Probe A^{red} bzw. B^{red}
   ∘ 1 Separator (Celgard 2500, 19 mm Durchmesser)
   ∘ 250 µm Lithiumfolie (MTI corp., 15 mm Durchmesser)
   ∘ 2 500 µm V2A-Stahlabstandhalter (15.4 mm Durchmesser)
   ∘ 20 µl Elektrolyt (1M LiTFSI (Aldrich, 99.95 %),0.25 M LiN03 (Alfa Aesar, 99.98%, anhydrous) in 50 Vol.-% DME (Sigma Aldrich, 99.5 %, anhydrous) und 50 Vol.-% DOL (Aldrich, 99.8 %, anhydrous)
- Die Zelle wurde galvanostatisch gemessen
   ∘ Ladung bei 11,7 mA g⁻¹_{Li2S} bis 3.4 V
   ∘ Danach Ent-/Ladung zwischen 1.8 und 2.6 V bei 58.4 mA g⁻¹_{Li2S} für 10 Zyklen
   ∘ Danach Ent-/Ladung zwischen 1.8 und 2.6 V bei 116.8 mA g⁻¹_{Li2S} für 40 Zyklen

Höhere Kapazität durch bessere Materialausnutzung bei kleineren Partikelgrößen ist sichtbar.

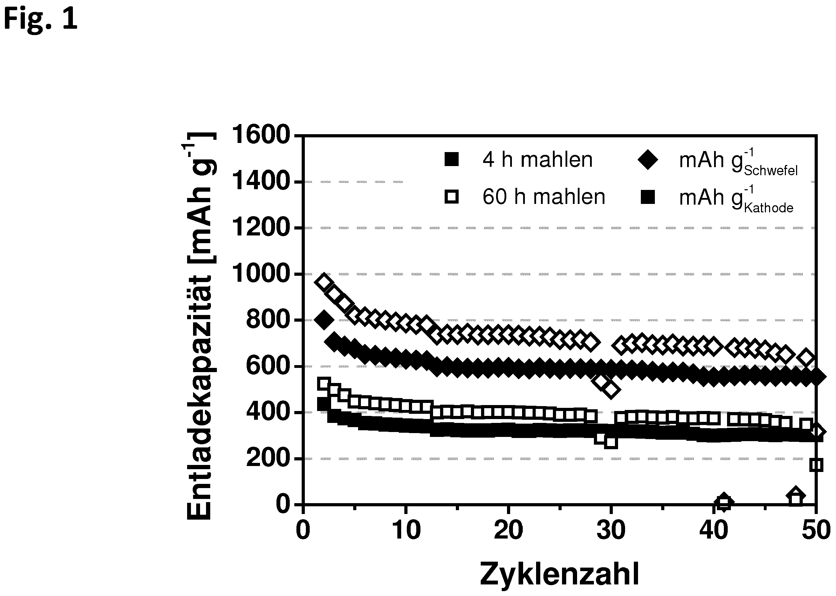

Die Resultate der Messungen sind dabei in Figur 1 dargestellt. Die dargestellten Messwerte zeigen, dass aufgrund der Verlängerung der Mahldauer sich eine geringere Li₂SO4 Partikelgröße ergibt und für eine Batterie die 60 h Stunden gemahlen wurde eine um etwa 30 % erhöhte Entladekapazität (Ladungsmenge die während der Entladung aus der Batterie entnommen werden kann) als bei einer Batterie deren Li₂S Aktivmaterial Precursor Li₂SO4 nur 4 h gemahlen wurde.

### Beispiel 3: Polysulfidadditive

- gleiche Herstellung der Probe und Kathode wie Probe B^{red} aus Beispiel 1 (60 h Mahlung)
- Herstellung von Zelle gleich, allerdings mit anderem Elektrolyt vermessen
   ∘ 20 µl Elektrolyt (1 M LiTFSI (Aldrich, 99.95 %). 0.125 M UN03 (Alta Aesar, 99.98%, anhydrous), 0.125 M U2S6 in 50 *Vol.-%* DME (Sigma Aldrich, 99.5 %, anhydrous) und 50 Vol.-% DOL (Aldrich, 99.8 %, anhydrous)
- Die Zelle wurde galvanostatisch gemessen
   ∘ Ladung bei 11.7 mA g⁻¹_{Li2S} bis 3.4 *V*
   ∘ Danach Ent-/Ladung zwischen 1.8 und 2.6 *V* bei 58.4 mA g⁻¹_{Li2S} für 10 Zyklen
   ∘ Danach Ent-/Ladung zwischen 1.8 und 2.6 V bei 116.8 mA g⁻¹_{Li2S} für 40 Zyklen

Höhere Kapazität durch bessere Materialausnutzung durch Polysulfidadditiv.

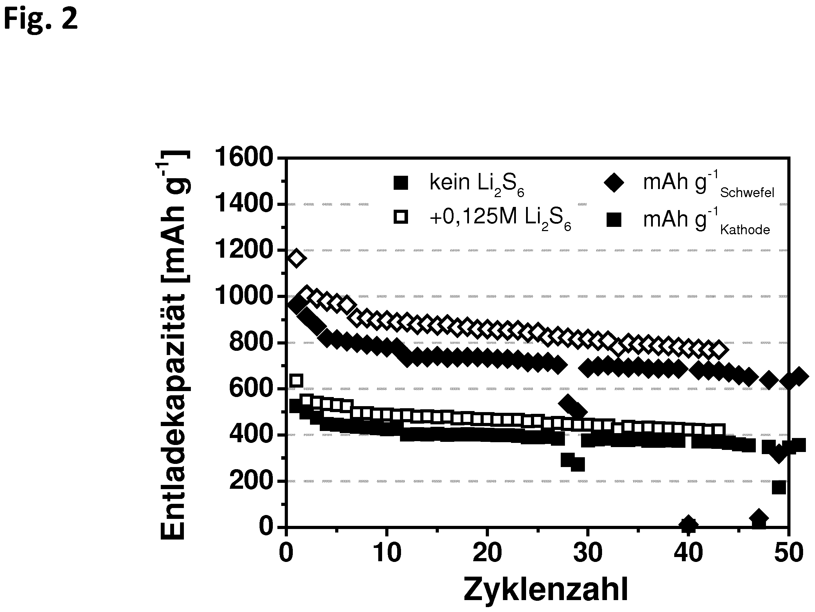

Die Resultate der Messungen sind dabei in Figur 2 dargestellt. Durch den Zusatz von 0,125 mol/L Li₂S₆ in den Elektrolyten einer Batterie mit Lithiumsulfid-Nanopartikeln lässt sich die Entladekapazität (Ladungsmenge die während der Entladung aus der Batterie entnommen werden kann) um 16 % steigern.

### Beispiel 4: 60 vs. 71 % S in Kathode

- 65,6 M.-% Li2S04.1H20 (>99 M.-% von Carl Roth) wurden mit Ruß (Ketjen Black 600JD) für 60 Stunden in einer Planetenkugelmühle (PM 100, Reisch GmbH) bei 450 rpm-1 gemahlen
   ∘ Mahlprogram jeweils 1 h mahlen 1 h Pause
- gleiche Herstellung der Kathode und Zelle wie für Probe B^{red} aus Beispiel 1
- Verbesserung: sehr hohe Schwefelausnutzung erreichbar!
- Nur geringe Verbesserung bei mAh g-1 cathode

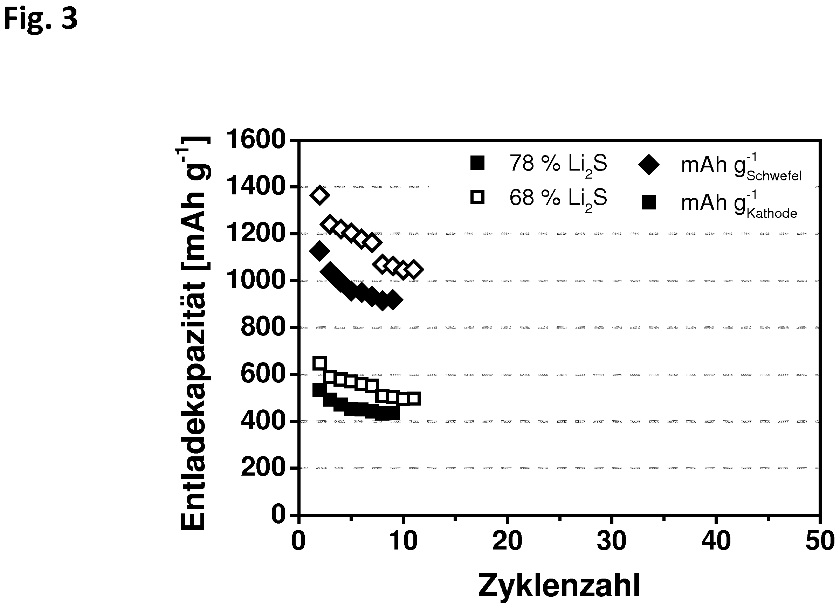

Die Ergebnisse der Messungen sind in Figur 3 dargestellt. Aufgrund der Verringerung der Li₂S-Nanopartikel Menge in der Kathode einer Lithium-Schwefel-Batterie von 78 Gew-% Li2S (entspricht 71 Gew-% Schwefel) auf 68 Gew-% Li2S (enstpricht 60 Gew-% Schwefel) lässt sich die Entladekapazität (Ladungsmenge die während der Entladung aus der Batterie entnommen werden kann) einer solchen Batterie um etwa 17 % steigern.

### Beispiel 5: gleiche Performance wie in S-Kathoden

Nachweis, dass Li2S Kathoden gleiche Performance zeigen wie Schwefelkathoden mit gleichem Kohlenstoffmaterial

Schwefelkathode + Zelle:
- Eine Kathode wurde durch eine trockene Verarbeitung erstellt und auf Streckaluminium (Bender GmbH, 12 µm dick) gewalzt
   ∘ die Massenanteile in der Kathode waren 60 M.-% Schwefel (>99.5%, Sigma-Aldrich), 36 M.-% (Ketjen Black 600JD), und 3 M.-% PTFE (Aldrich)
- Die erhaltene Kathode wurde in einer Knopfzelle (CR2016) verbaut. Die Bestandteile waren
   ∘ 12mm Schwefelkathode
   ∘ 1 Separator (Celgard 2500, 19 mm Durchmesser)
   ∘ 250 µm Lithiumfolie (MTI corp., 15 mm Durchmesser)
   ∘ 2 500 µm V2A-Stahlabstandhalter (15.4 mm Durchmesser)
   ∘ 20 µl Elektrolyt (1 M LiTFSI (Aldrich, 99.95 %), 0.25 M LiNO3 (Alta Aesar, 99.98%, anhydrous) in 50 Vol.-% DME (Sigma Aldrich, 99.5 %, anhydrous) und 50 Vol.-% DOI (Aldrich, 99.8 %, anhydrous)
- Die Zelle wurde galvanostatisch gemessen
   ∘ Ent-/Ladung zwischen 1.8 und 2.6 V bei 836 mA g⁻¹_{Schwefel} für 50 Zyklen

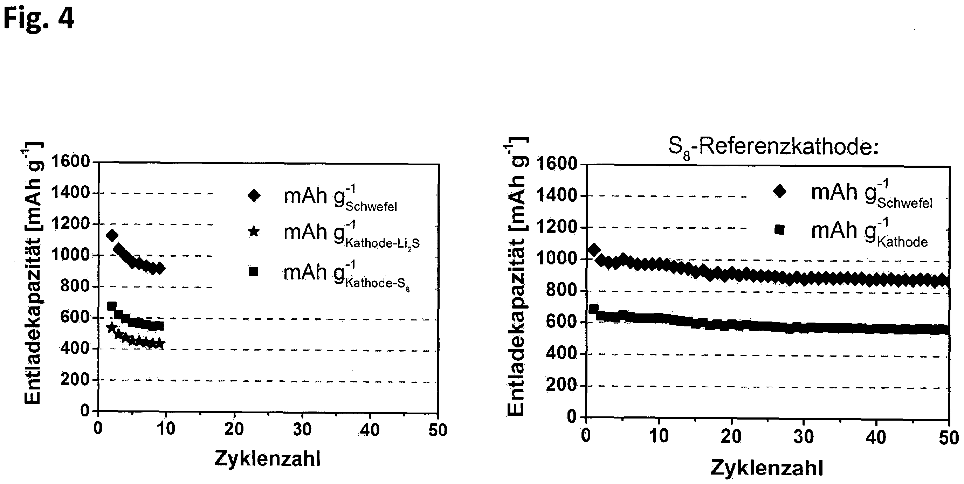

Die Ergebnisse der Messungen sind in Figur 4 dargestellt. Im direkten Vergleich mit einer Batterie deren Kathodenaktivmaterial zu 60 Gew-% aus Schwefel besteht besitzt eine Batterie deren Kathodenaktivmaterial zu 68 Gew-% aus Li₂S besteht (entspricht zu 60 Gew-% Schwefel) eine ähnliche Entladekapazität (Ladungsmenge die während der Entladung aus der Batterie entnommen werden kann).

### Beispiel 6: Ummantelung der Alkalimetallsulfid-Nanopartikel mit Kohlenstoff

Alkalimetallsulfid-Nanopartikel können in einem diskontinuierlich oder kontinuierlich betriebenen CVD-Durchfluss- oder CVD-Wirbelschichtreaktor mittels eines gasförmigen Precursors mit einer Kohlenstoffummantelung versehen werden.
- Ofenbetriebstemperatur: 750 °C
- Eingesetzte Gase: Argon und Ethen
- Ofenbetriebsdauer: 15 - 60 min

### Abkürzungen:

DME: 1,2-Dimethoxyethan
DOL: 1,3-Dioxolan
LiN03: Lithiumnitrat
LiTFSI: Lithiumbis(trifluoromethylsulfonyl)imid
Li2S04.1 H20: Lithiumsulfat Monohydrat
Li2S04: Lithiumsulfat
Li2S6: Lithiumpolysulfid mit mittlerer Schwefelkettenlänge von sechs

## Patentansprüche

1. Verfahren zur Herstellung von Alkalimetallsulfid-Nanopartikeln, **dadurch gekennzeichnet, dass** bei dem Verfahren eine Mischung, enthaltend Alkalimetallsulfat-Nanopartikel und Kohlenstoff-haltigem Material erzeugt und die Mischung unterhalb der Schmelztemperatur des Alkalimetallsulfats carbothermisch reduziert wird, **dadurch gekennzeichnet, dass** die mittlere Teilchengröße d₅₀ der Alkalimetallsulfat-Nanopartikel von 5 bis 100 nm beträgt.

2. Verfahren nach Anspruch 1, **dadurch gekennzeichnet, dass** das Alkalimetall ausgewählt ist aus der Gruppe bestehend aus Lithium und/oder Natrium.

3. Verfahren nach einem der vorhergehenden Ansprüche, **dadurch gekennzeichnet, dass** das Kohlenstoff-enthaltende Material ausgewählt ist aus der Gruppe bestehend aus Ruß, porösen Kohlenstoffen, Kohlenstoffnanoröhrchen, Graphit, Graphen, Kohlenstofffasern sowie Mischungen oder Kombinationen hieraus, und/oder die Alkalimetallsulfat-Nanopartikel mit dem Kohlenstoff enthaltenden Material in einem Gewichtsverhältnis von 20:100 bis 100:100, bevorzugt von 30:100 bis 75:100, weiter bevorzugt von 53:100 bis 73:100, weiter bevorzugt von 62:100 bis 69:100 eingesetzt wird.

4. Verfahren nach einem der vorhergehenden Ansprüche, **dadurch gekennzeichnet, dass** die Mischung
a) durch Mahlen von Alkalimetallsulfat mit dem Kohlenstoff enthaltenden Material, insbesondere durch Mahlen in einer Kugelmühle,
b) durch Fällung von Alkalimetallsulfat-Nanopartikel in Gegenwart des Kohlenstoff enthaltenden Materials, oder
c) durch Infiltration einer Alkalimetallsulfat-Lösung in poröse Kohlenstoffmaterialien
erzeugt wird.

5. Verfahren nach einem der vorhergehenden Ansprüche, **dadurch gekennzeichnet, dass** die carbothermische Reduktion
i) bei Temperaturen von 500 bis 880 °C, bevorzugt von 600 bis 860 °C, weiter bevorzugt von 650 bis 840 °C, besonders bevorzugt von 700 bis 830 °C durchgeführt wird; und/oder
ii) über einen Zeitraum von 0,2 bis 48 h, bevorzugt von 2 bis 4 h durchgeführt wird; und/oder
iii) unter einer Inertgasatmosphäre, insbesondere unter einer Argon- und/oder Stickstoffatmosphäre durchgeführt wird.

6. Verfahren nach einem der vorhergehenden Ansprüche, **dadurch gekennzeichnet, dass** nach erfolgter carbothermischer Reduktion die Alkalimetallsulfid-Nanopartikel mit einer aus Kohlenstoff bestehenden oder Kohlenstoff enthaltenden Schale ummantelt werden.

7. Verfahren nach vorhergehendem Anspruch, **dadurch gekennzeichnet, dass** zur Ummantelung mindestens ein Kohlenstoff enthaltender Precursor, insbesondere ein gasförmiger und/oder flüssiger Precursor oder ein Precursor in Lösung eingesetzt wird, der mit den Alkalimetallsulfid-Nanopartikeln kontaktiert und aus dem nach erfolgter Kontaktierung die Kohlenstoff enthaltenden Hülle abgeschieden wird.

8. Verfahren nach vorhergehendem Anspruch, **dadurch gekennzeichnet, dass** der mindestens eine gasförmige Precursor ausgewählt ist aus der Gruppe bestehend aus bei Normalbedingungen gasförmigen Kohlenwasserstoffen, bevorzugt ungesättigten gasförmigen Kohlenwasserstoffen, insbesondere Ethin, Ethen, Propen sowie Mischungen hieraus und/oder der mindestens eine flüssige Precursor ausgewählt ist aus der Gruppe bestehend aus Pech und/oder Steinkohleteer oder organischen Polymeren und/oder organischen Polymerisations-Monomeren in flüssiger Phase oder als Lösung.

9. Alkalimetallsulfid-Nanopartikel, herstellbar nach einem Verfahren nach einem der vorhergehenden Ansprüche, wobei die Alkalimetallsulfid-Nanopartikel einen Kern aus Alkalimetallsulfid sowie eine aus Kohlenstoff bestehende oder Kohlenstoff enthaltende Schale aufweisen, **dadurch gekennzeichnet, dass** ihre mittlere Teilchengröße d₅₀ zwischen 5 und 100 nm beträgt und die Schale eine Dicke von 2 bis 20 nm aufweist.

10. Verwendung der Alkalimetallsulfid-Nanopartikel nach Anspruch 9 als Kathodenmaterial für Alkalimetall-Schwefel-Batterien.

11. Alkalimetall-Schwefel-Batterie, umfassend eine Kathode, enthaltend Alkalimetallsulfid-Nanopartikel nach Anspruch 9.

12. Alkalimetall-Schwefel-Batterie nach vorhergehendem Anspruch, **dadurch gekennzeichnet, dass** die Kathode ein Kathodenmaterial umfasst, das zumindest teilweise fibrilliertes Polytetrafluorethylen sowie Alkalimetallsulfid-Nanopartikel als elektrochemisch aktives Kathodenmaterial aufweist.

## Claims

1. Process for the preparation of alkali metal sulfide nanoparticles, **characterized in that**, in the process, a mixture comprising alkali metal sulfate nanoparticles and carbon-containing material is produced and the mixture is reduced carbothermally below the melting temperature of the alkali metal sulfate, **characterized in that** the average particle size d₅₀ of the alkali metal sulfate nanoparticles is of 5 to 100 nm.

2. Process according to claim 1, **characterized in that** the alkali metal is selected from the group consisting of lithium and/or sodium.

3. Process according to one of the preceding claims, **characterized in that** the carbon-containing material is selected from the group consisting of carbon black, porous carbons, carbon nanotubes, graphite, graphene, carbon fibers, and mixtures or combinations thereof, and/or the alkali metal sulfate nanoparticles are used with the carbon-containing material in a weight ratio of 20:100 to 100:100, preferably of 30:100 to 75:100, more preferably of 53:100 to 73:100, more preferably of 62:100 to 69:100.

4. Process according to one of the preceding claims, **characterised in that** the mixture is generated
a) by grinding alkali metal sulphate with the carbon-containing material, in particular by grinding in a ball mill,
b) by precipitation of alkali metal sulfate nanoparticles in the presence of the carbon-containing material, or
c) by infiltration of an alkali metal sulphate solution into porous carbonaceous materials.

5. Process according to one of the preceding claims, **characterized in that** the carbothermic reduction
i) is carried out at temperatures of 500 to 880 °C, preferably of 600 to 860 °C, more preferably of 650 to 840 °C, particularly preferably of 700 to 830 °C; and/or
ii) is carried out over a period of 0.2 to 48 h, preferably of 2 to 4 h; and/or
iii) is carried out in an inert gas atmosphere, in particular in an argon and/or nitrogen atmosphere.

6. Process according to one of the preceding claims, **characterized in that**, after carbothermic reduction, the alkali metal sulfide nanoparticles are coated with a shell consisting of carbon or comprising carbon.

7. Process according to the preceding claim, **characterised in that**, for coating, at least one carbon-containing precursor, in particular a gaseous and/or liquid precursor or a precursor in solution, is used, which is contacted with the alkali metal sulfide nanoparticles and from which, after contacting, the carbon-containing shell is deposited.

8. Process according to the preceding claim, **characterized in that** the at least one gaseous precursor is selected from the group consisting of hydrocarbons being gaseous under normal conditions, preferably unsaturated gaseous hydrocarbons, especially ethyne, ethene, propene and mixtures thereof, and/or the at least one liquid precursor is selected from the group consisting of pitch and/or coal tar or organic polymers and/or organic polymerization monomers in the liquid phase or as a solution.

9. Alkali metal sulfide nanoparticles, producible by a process according to one of the preceding claims, said alkali metal sulfide nanoparticles comprising a core of alkali metal sulfide and a shell consisting of carbon or comprising carbon, **characterized in that** their average particle size d₅₀ is between 5 and 100 nm and said shell has a thickness of 2 to 20 nm.

10. Use of the alkali metal sulfide nanoparticles according to claim 9 as cathode material for alkali metal sulfur batteries.

11. Alkali metal sulfur battery, comprising a cathode containing alkali metal sulfide nanoparticles according to claim 9.

12. Alkali metal sulfur battery according to the previous claim, **characterized in that** the cathode comprises a cathode material which has at least partially fibrillated polytetrafluoroethylene and, as electrochemically active cathode material, alkali metal sulfide nanoparticles.

## Revendications

1. Procédé de fabrication de nanoparticules de sulfure d'un métal alcalin, **caractérisé en ce que**, dans le procédé, on produit un mélange contenant des nanoparticules de sulfate d'un métal alcalin et un matériau contenant du carbone, et on soumet le mélange à une réduction carbothermique en-dessous de la température de fusion du sulfate d'un métal alcalin, **caractérisé en ce que** la granulométrie moyenne d₅₀ des nanoparticules de sulfate d'un métal alcalin est de 5 à 100 nm.

2. Procédé selon la revendication 1, **caractérisé en ce que** le métal alcalin est choisi dans le groupe consistant en le lithium et/ou le sodium.

3. Procédé selon l'une des revendications précédentes, **caractérisé en ce que** le matériau contenant du carbone est choisi dans le groupe consistant en le noir de carbone, les carbones poreux, les nanotubes de carbone, le graphite, le graphène, les fibres de carbone ainsi que les mélanges ou combinaisons de ceux-ci, et/ou **en ce que** les nanoparticules de sulfate d'un métal alcalin sont utilisées en présentant, avec le matériau contenant du carbone, un rapport en poids de 20:100 à 100:100, de préférence de 30:100 à 75:100, plus préférentiellement de 53:100 à 73:100, plus préférentiellement de 62:100 à 69:100.

4. Procédé selon l'une des revendications précédentes, **caractérisé en ce que** le mélange est produit
a) par broyage du sulfate d'un métal alcalin avec le matériau contenant du carbone, en particulier par broyage dans un broyeur à billes,
b) par précipitation de nanoparticules de sulfate d'un métal alcalin en présence du matériau contenant du carbone, ou
c) par infiltration d'une solution d'un sulfate d'un métal alcalin dans des matériaux carbonés poreux.

5. Procédé selon l'une des revendications précédentes, **caractérisé en ce que** la réduction carbothermique est mise en oeuvre
i) à des températures de 500 à 880 °C, de préférence de 600 à 860 °C, plus préférentiellement de 650 à 840 °C, d'une manière particulièrement préférée de 700 à 830 °C ; et/ou
ii) sur une durée de 0,2 à 48 h, de préférence de 2 à 4 h ; et/ou
iii) sous une atmosphère d'un gaz inerte, en particulier sous une atmosphère d'argon et/ou d'azote.

6. Procédé selon l'une des revendications précédentes, **caractérisé en ce que**, après que la réduction carbothermique est terminée, on gaine les nanoparticules de sulfure d'un métal alcalin à l'aide d'une coque constituée de carbone ou contenant du carbone.

7. Procédé selon la revendication précédente, **caractérisé en ce qu'**on utilise pour le gainage au moins un précurseur contenant du carbone, en particulier un précurseur gazeux et/ou liquide ou un précurseur en solution, qui est mis en contact avec les nanoparticules de sulfure d'un métal alcalin et est séparé de la gaine contenant du carbone après que la mise en contact est terminée.

8. Procédé selon la revendication précédente, **caractérisé en ce que** l'au moins un précurseur gazeux est choisi dans le groupe consistant en les hydrocarbures gazeux dans des conditions normales, de préférence les hydrocarbures gazeux insaturés, en particulier l'éthyne, l'éthène, le propène, ainsi que les mélanges de ceux-ci, et/ou l'au moins un précurseur liquide est choisi dans le groupe consistant en la poix et/ou le goudron de houille ou les polymères organiques et/ou les monomères de polymérisation organiques, en phase liquide ou sous forme d'une solution.

9. Nanoparticules de sulfure d'un métal alcalin, pouvant être fabriquées par un procédé selon l'une des revendications précédentes, les nanoparticules de sulfure d'un métal alcalin présentant un noyau en sulfure d'un métal alcalin ainsi qu'une coque constituée de carbone ou contenant du carbone, **caractérisées en ce que** leur granulométrie moyenne d₅₀ est comprise entre 5 et 100 nm, la coque présentant une épaisseur de 2 à 20 nm.

10. Utilisation des nanoparticules de sulfure d'un métal alcalin selon la revendication 9 en tant que matériau de cathode pour des batteries métal alcalin-soufre.

11. Batterie métal alcalin-soufre comprenant une cathode contenant des nanoparticules de sulfure d'un métal alcalin selon la revendication 9.

12. Batterie métal alcalin-soufre selon la revendication précédente, **caractérisée en ce que** la cathode comprend un matériau de cathode qui présente au moins partiellement, en tant que matériau de cathode électrochimiquement actif, du polytétrafluoréthylène fibrillé, ainsi que des nanoparticules de sulfure d'un métal alcalin.
